**Europäisches Patentamt**

**European Patent Office**

**Office européen des brevets**

(11) Veröffentlichungsnummer: **0 354 352**
**A1**

## (12) EUROPÄISCHE PATENTANMELDUNG

(21) Anmeldenummer: **89112431.5**

(22) Anmeldetag: **07.07.89**

(51) Int. Cl.⁴: **A61C 15/02**

(30) Priorität: **19.07.88 DE 8809217 U**

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **GEORG KARL GEKA-BRUSH GMBH**

**D-8809 Bechhofen-Waizendorf(DE)**

(72) Erfinder: **Fitjer, Holger**
**Lambrechtstrasse 15**
**D-8800 Ansbach(DE)**

(54) **Reinigungsgerät für Zahnzwischenräume.**

(57) Reinigungsgerät für Zahnzwischenräume, bestehend aus einer Einsteckhalterung (2) und einem daran befestigten Stiel (3), der mit zahnreinigendem Besatz versehen ist, wobei der Stiel (3) aus einem einzelnen, als Eindraht-Seele angeordneten dünnen Metallstrang mit zum Eindrigen in die Zahnzwischenräume ausreichender Steifigkeit gebildet ist, auf dessen Außenfläche oder einem Teil davon eine abrasive Schicht (4) zum Abtragen von Zahnbelag aufgebracht ist.

FIG.1

Xerox Copy Centre

EP 0 354 352 A1

## Reinigungsgerät für Zahnzwischenräume

Die Erfindung bezieht sich auf ein Reinigungsgerät für Zahnzwischenräume, bestehend aus einem Haltegriff und einem daran befestigtem Stiel, der mit zahnreinigendem Besatz versehen ist.

Mit den allseits bekannten, weithin gebräuchlichen Zahnbürsten läßt sich an der Zahnoberfläche nur dort ein ausreichender Reinigungseffekt erzielen, wo die Borsten der Zahnbürste senkrecht auf die Zahnoberfläche gestellt sind und in dieser Ausrichtung hin und her geführt werden. Dabei werden zwar ohne weiteres die Zähne im Bereich der Mundhöhle, der Wangen- und Zungenseite sowie an ihren Kauflächen befriedigend gereinigt, nicht aber die Zwischenräume, die durch einander gegenüberliegende Seitenflächen benachbarter Zähne gebildet werden. Solche Zahnzwischenräume bilden ausgezeichnete Schlupfwinkeln oder Nischen für Bakterienbeläge, so daß eine intensive Zahnpflege gerade an den Zahnoberflächen, die den Zahnzwischenraum begrenzen, geboten ist. Die Genannten, üblichen Zahnbürsten sind zu groß, um in die Zahnzwischenräume eingeführt zu werden, zudem ist es mit großen Schwierigkeiten verbunden, deren Borsten in senkrechter Stellung auf Zwischenräume bildende Zahnseitenflächen angreifen zu lassen.

Zur Abhilfe wurde ein Bürste zur Reinigung von Zahnzwischenräumen vorgeschlagen (deutsche Gebrauchsmusterschrift 74 42 493), welche quer zur Bürstenachse parallel nebeneinander angeordnet umgeben. Hierfür bedarf es einer ausreichenden Befestigung der einzelnen Borsten der Bürste, insbesondere um das sogenannte Ausfasern von der Bürstenspitze her zu vermeiden. Zur Art und Weise der ausreichend starken Befestigung schweigt allerdings die genannte Fundstelle.

Bei einer anderen, bekannten Reinigungsbürste für Zahnzwischenräume sind zur Befestigung der Borsten zwei Drähte miteinander verdrillt, zwischen denen die Borsten gehaltert sind. Dabei sind allerdings mindestens zwei miteinander verschlungene Drahtstränge notwendig, was den Durchmesser des inneren Trägers der Bürste unerwünscht vergrößert. Besonders kleine Zahnzwischenräume können mit einer derartigen Bürste nicht mehr gereinigt werden.

Zahnreinigungsbürsten weisen allgemein den Nachteil auf, daß bei der Handhabung die Borsten starken Biegungen unterworfen wären. Dies führt zu einem Nachlassen der Elastizität der Borsten und zur Ermüdung von deren Material.

Der Erfindung liegt die Aufgabe zugrunde, ein auch für besonders kleine Zahnzwischenräume geeignetes Reinigungsgerät zu schaffen, welches veschleißfest ist, eine hohe Lebensdauer aufweist und Zahnfleischverletzungen weitgehend vermeidet.

Zur Lösung dieser Aufgabe ist bei einem Zahnreinigungsgerät der eingangs genannten Art erfindungsgemäß vorgesehen, daß der Stiel aus einem einzelnen, als Eindraht-Seele angeordneten, dünnen Strang mit zum Eindringen in die Zahnzwischenräume ausreichender Steifigkeit gebildet ist, auf dessen Außenfläche oder einem Teil davon eine abrasive Schicht zum Abtragen von Zahnbelag aufgebracht ist.

Mit anderen Worten, es wird ein längliches Zahnreinigungsgerät geschaffen, welches aus drei wesentlichen Teilen besteht: Einer Einsteckhalterung zur Aufnahme in einem Handhabungsgriff, welche das eine Ende bildet; einem an der Einsteckhalterung angeformten, dessen Längsachse fortsetzenden Stiel, welcher das gegenüberliegende Ende bildet; und einer den Stiel zumindest teilweise umgebenden Beschichtung, welche gegenüber Zahnbeläge abrasive Eigenschaften aufweist. Es wird also das konventionelle Konzept, eine Vielzahl von Borsten zu einer Bürste zusammenzufassen, aufgegeben. Statt dessen wird der Stiel mit einer Beschichtung umgeben, welche ein Abschaben, Abfeilen od. dgl. von auf Zahnflächen befindlichen, schädlichen Belag ermöglicht. Der Ersatz der Borsten durch die abrasive Beschichtung führt aus den eingangs genannten Gründen zu einer höheren Lebensdauer und zudem zu einer einfacheren Herstellung; denn in der Regel ist es einfacher, eine Oberfläche teilweise oder durchgehend zu beschichten als mit Borstenbesatz zu versehen. Drahtstücke können in vorteilhafter Weise leicht mit der zum Eindrigen in die Zahnzwischenräume notwendigen Steifigkeit versehen werden.

Im Rahmen der Erfindung kann die abrasive Schicht aus einem einzigen Stück oder aus mehreren Stücken gebildet sein. Bei der einstückigen Ausbildung ist es zur Erhöhung des Abriebeffektes beim Zahnbelag zweckmäßig, die Oberfläche der abrasiven Schicht möglichst rauh -wie z. B. bei einer Feile - auszubilden. Bei der Bildung der abrasiven Schicht aus mehreren einzelnen Teilen ist es zur Steigerung des Abrasionsefffektes vorteilhaft, die einzelnen Teile als sich vom Stiel radial erstreckende, noppen- und/oder rippenförmige Vorsprünge auszubilden.

Auf der Basis der Erfindung bestehen vielfältige Gestaltungsmöglichkeiten für die Oberfläche der abrasiven Schicht. Zum Abtragen von Zahnbelag eignen sich insbesondere Vertiefungen aufweisende Oberflächen. Die Vertiefungen können insbesondere zu Nuten weitergebildet sein, welche parallel zueinander verlaufen oder wendelförmig zusammenhängen und sich dabei in einer Schraubenlinie um die Stielachse herum erstrecken. Eine andere Möglichkeit der Oberflächengestaltung besteht darin, nutenförmige Vertiefungen auszubilden, due zueinander und zur Stielachse parallel verlaufen. Die Vertiefungen, insbesondere die Nuten, haben den Vorteil, daß darin Zahnbelag aufgenommen und so von der Zahnoberfläche forttransportiert werden kann.

Ein alternativer Weg zur Förderung des Abtragungseffektes besteht darin, die abrasive Schicht aus einzelnen, in Stielachsenrichtung voneinander beabstandeten, radialen Vorsprüngen in Form dünner Scheiben zu bilden. Diese können den Stiel ganz oder teilweise umlaufen und zueinander parallel und/oder wendelförmig zusammenhängend angeordnet sein. Diese Scheibenform kann noch dahingehend weitergebildet werden, daß die Kanten oder Ränder der Scheiben keilförmig zugespitzt sind, so daß gleichsam verhältnimäßig scharfe Messerschneiden gebildet werden, die ein effektives Abschaben von Zahnbelag ermöglichen.

Bei der Ausbildung von Nuten, Scheiben, Noppen und/oder Vertiefungen liegt es im Rahmen der Erfindung, deren Abstände über die Länge des Stieles derart zu variieren, daß eine Anpassung unterschiedlicher Abschnitte der abrasiven Beschichtung an typische Zahnzwischenräume unterschiedlicher Form und Größe erreicht wird.

Grundsätzlich kann der vom Stiel und der abrasiven Beschichtung gebildete Querschnitt beliebig geformten Umriß besitzen. Zur Schonung und Vermeidung von Verletzungen des Zahnfleisches ist es vorteilhaft, den Umriß rundlich, beispielsweise oval auszubilden. Mit ovalem, insbesondere ellipsenförmigem Umriß bzw. Kontur wird der Vorteil erzielt, daß sich das so gestaltete Reinigungsgerät sowohl in einem breiten als auch in einem schmalen Zahnzwischenraum effektiv handhaben läßt.

Dem Problem der unterschiedlichen Formen von Zahnzwischenräumen begegnet eine weitere Ausbildung. Danach verkleinern sich die Querschnittsabmessungen von Stiel und darauf angebrachter abrasiver Schicht insgesamt mit zunehmender Nähe zur Spitze des Stiels. Aufgrund dessen kann - je nach Breite des Zahnzwischenraums -das Zahnreinigungsgerät mehr oder weniger tief eingeführt werden.

Als Herstellungsmaterial für den Stiel eignen sich Metall oder Kunststoff, für die abrasive Schicht insbesondere physiologisch verträglicher Kunststoff.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen jeweils im stark vergrößerten Maßstab:

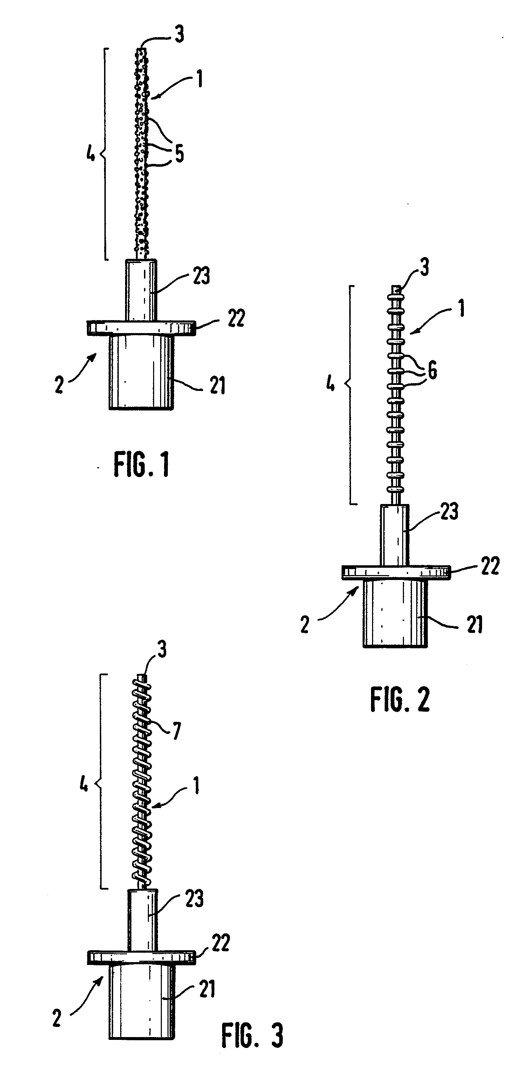

Fig. 1 bis 3: Je eine Ansicht eines Ausführungsbeispiels eines erfindungsgemäßen Zahnreinigungsgeräts.

Gemäß Fig. 1 besteht eine spezielle Ausführungsform eines Zahnreinigungsgeräts 1 aus einer Einsteckhalterung 2 mit Klemmstopfen 21, Anschlagbund 22 und Kunststoffumhüllung 23, und einem daran befestigten länglichen Stiel 3, der von einer abrasiven Beschichtung 4 umgeben ist. Der Klemmstopfen 21 der Einsteckhalterung 2 kann in eine (nicht gezeichnete) halteausnehmung eines (nicht gezeichneten) Handhabungsgriffs eingesteckt werden.

Wesentlich ist, daß der Stiel 3 als möglichst dünne Eindraht-Seele ausgeführt ist. Diese ist in der Zeichnung der Deutlichkeit halber vergrößert dargestellt. Auf der Oberfläche des Eindraht-Stieles 3 sind zur Bildung der abrasiven Beschichtung 4 einzelne, vorzugsweise noppenartige Vorsprünge 5 in unregelmäßiger Anordnung aufgebracht.

Eine andere Möglichkeit, die abrasive Beschichtung 4 auszubilden, zeigt Figur 2. Danach ist die abrasive Schicht 4 aus einzelnen Scheibchen 6 gebildet, welche den Eindraht-Stiel 3 in dessen axialer Richtung voneinander beabstandet umgeben.

Das Ausührungsbeispiel gemäß Fig. 3 unterscheidet sich von dem nach Fig. 2 dadurch, daß einzelne Scheiben auf die Eindraht-Seele aufgebracht sind, die miteinander schraubenförmig zusammenhängen und so eine Wendel 7 bilden.

Die Funktionsweise des Zahnreinigungsgeräts 1 gemäß Figuren 1 - 3 ist wie folgt: Zunächst wird das Reinigungsgerät 1 mit dem Klemmstopfen 21 seiner Einsteckhalterung 2 in die Halteausnehmung eines (nicht gezeichneten) Bedienungsgriffs mit Klemmsitz eingesteckt. Dann wird mittels des Bedienungsgriffes der Eindraht-Stiel 3 des Geräts 1 mit der darauf befindlichen abrasiven Beschichtung 4 in einen (nicht gezeichneten) Zahnzwischenraum hineingeführt und dort mehrmals hin und herbewegt. Dabei kommt es zur Reibung der abrasiven Beschichtung 4 auf der Zahnoberfläche, wodurch etwaiger Zahnbelag oder Zahnverunreinigungen abgetragen werden. Der zur Einsteckhalterung 2 gehörige Anschlagbund 22 dient einerseits als Anschlagfläche beim Einstecken des Klemmstopfens 21 in die Halteausnehmung und andererseits als Schutzschild vor Verunreinigungen.

## Ansprüche

1. Reinigungsgerät für Zahnzwischenräume, bestehend aus einer Einsteckhalterung (2) und einem daran befestigten Stiel (3), der mit zahnreinigendem Besatz versehen ist, dadurch gekennzeichnet, daß der Stiel (3) aus einem einzelnen, als Eindraht-Seele angeordneten dünnen Metallstrang mit zum Eindringen in die Zahnzwischenräume ausreichender Steifigkeit gebildet ist, auf dessen Außenfläche oder einem Teil davon eine abrasive Schicht (4) zum Abtragen von Zahnbelag aufgebracht ist.

2. Reinigungsgerät nach Anspruch 1, dadurch gekennzeichnet, daß die abrasive Schicht (4) mehrstückig ausgebildet ist, wobei die einzelnen Stücke sich vom Stiel (3) radial erstreckende, noppen- und/oder rippenförmige Vorsprünge (5) bilden.

3. Reinigungsgerät nach Anspruch 1, dadurch gekennzeichnet, daß die abrasive Schicht (4) einstückig mit aufgerauhter Oberfläche ausgebildet ist.

4. Reinigungsgerät nach einem der vorherigen Ansprüche, dadurch gekennzeichnet, daß auf der Oberfläche der abrasiven Schicht nutenförmige, die Stielachse umlaufende Vertiefungen ausgebildet sind, welche parallel zueinander verlaufen oder wendelförmig zusammenhängen.

5. Reinigungsgerät nach einem der Ansprüche 1 bis 3, dadurch gekennzeichnet, daß auf der Oberfläche der abrasiven Schicht (4) nutenförmige Vertiefungen ausgebildet sind, die zueinander und zur Stielachse parallel verlaufen.

6. Reinigungsgerät nach Anspruch 1, dadurch gekennzeichnet, daß die abrasive Schicht (4) aus einzelnen, voneinander beabstandeten, radialen Vorsprüngen in Form dünner Scheiben (6) gebildet ist, welche den Stiel (3) ganz oder teilweise umlaufen und zueinander parallel und/oder wendelförmig zusammenhängend angeordnet sind.

7. Reinigungsgerät nach Anspruch 6, dadurch gekennzeichnet, daß die Scheiben scharfe, keilförmig zugespitzte Kanten aufweisen.

8. Reinigungsgerät nach einem der Ansprüche 2 oder 4 bis 7, dadurch gekennzeichnet, daß die Abstände der Vorsprünge (5), Vertiefungen und/oder Scheiben (6) zur Anpassung an unterschiedlich geformte Zahnzwischenräume über die Stiellänge variiert sind.

9. Reinigungsgerät nach einem der vorhergehenden Ansprüche, dadurch gekennzeichnet, daß der Querschnitt der um die abrasive Schicht (4) gelegten Hüllfläche im wesentlichen rundlichen und/oder ovalen Umriß aufweist.

10. Reinigungsgerät nach einem der vorherigen Ansprüche, dadurch gekennzeichnet, daß die Querschnittsabmessungen der abrasiven Schicht (4) sich mit zunehmender Nähe zur Spitze des Stiels verkleinern.

11. Reinigungsgerät nach einem der vorherigen Ansprüche, dadurch gekennzeichnet, daß die abrasive Schicht (4) aus physiologisch verträglichem Kunststoff besteht.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 319 377 (TARRSON) --- | | A 61 C 15/02 |
| A | GB-A-2 016 931 (ENOMAA) --- | | |
| A | WO-A-8 801 154 (SAXER) ----- | | |

|  |  |  | RECHERCHIERTE SACHGEBIETE (Int. Cl.5) |
|---|---|---|---|
| | | | A 61 C |

Der vorliegende Recherchenbericht wurde für alle Patentansprüche erstellt

| Recherchenort | Abschlußdatum der Recherche | Prüfer |
|---|---|---|
| DEN HAAG | 03-11-1989 | VANRUNXT J.M.A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument